# EUROPEAN PATENT APPLICATION

(11) **EP 4 443 584 A1**
(43) Date of publication of application: **09.10.2024**
(21) Application number: 21966085.9
(22) Date of filing: 03.12.2021
(51) Int. Cl.: H01M 10/0525

(54) **ELECTROCHEMICAL DEVICE AND ELECTRONIC DEVICE**

(71) Applicant: Ningde Amperex Technology Limited, Zhangwan Town, Jiaocheng District Ningde City Fujian 352100 (CN)
(72) Inventor: LIU, Jianyu, Ningde City, Fujian 352100 (CN); LONG, Hai, Ningde City, Fujian 352100 (CN); TANG, Chao, Ningde City, Fujian 352100 (CN)
(74) Representative: Klunker IP Patentanwälte PartG mbB
(86) International application number: PCT/CN2021/135355
(87) International publication number: WO 2023/097658

(57) **Abstract**

An electrochemical device includes a positive electrode, a negative electrode, a separator, and an electrolyte solution. The electrolyte solution includes fluoroethylene carbonate and a trinitrile compound. Based on a mass of the electrolyte solution, a mass percent of the fluoroethylene carbonate is A%, satisfying: 4 ≤ A ≤ 10, and a mass percent of the trinitrile compound is B%, satisfying: 1 ≤ B ≤ 3. Apositive active material of a positive electrode includes a metal element M. The metal element M includes at least one of Ti, Mg, or Al. A content of the metal element M in the positive active material is C ppm. C and B satisfy: 7 ≤ C × B/1000 ≤ 27.

## Description

### TECHNICAL FIELD

This application relates to the technical field of electrochemistry, and in particular, to an electrochemical device and an electronic device.

### BACKGROUND

By virtue of a high specific energy, a high working voltage, a low self-discharge rate, a small size, a light weight, and other characteristics, lithium-ion batteries are widely used in various fields such as electrical energy storage, portable electronic devices, and electric vehicles. With increasingly wider application of the lithium-ion batteries, higher requirements are imposed on the lithium-ion batteries. For example, a lithium-ion battery is required to have a faster charging speed and a longer service life.

However, with the increase of the charging speed of the lithium-ion battery, the temperature of the battery rises to a greater extent, and side reactions in the lithium-ion battery increase at a high temperature, thereby impairing the cycle performance of the lithium-ion battery.

### SUMMARY

An objective of this application is to provide an electrochemical device and an electronic device to improve cycle performance of the electrochemical device. Specific technical solutions are as follows:

A first aspect of this application provides an electrochemical device. The electrochemical device includes a positive electrode, a negative electrode, a separator, and an electrolyte solution. The electrolyte solution includes fluoroethylene carbonate and a trinitrile compound. Based on a mass of the electrolyte solution, a mass percent of the fluoroethylene carbonate is A%, satisfying: 4 ≤ A ≤ 10. For example, A may be 4, 5, 6, 7, 8, 9, 10, or a value falling within a range formed by any two thereof. A mass percent of the trinitrile compound is B%, satisfying: 1 ≤ B ≤ 3. For example, B may be 1, 1.5, 2, 2.5, 3, or a value falling within a range formed by any two thereof. The positive electrode includes a positive active material. The positive active material includes a metal element M. The metal element M includes at least one of Ti, Mg, or Al. The content of the metal element M in the positive active material is C ppm. C and B satisfy: 7 ≤ C × B/1000 ≤ 27. For example, the value of C×B/1000 may be 7, 10, 13, 15, 18, 20, 22, 25, 27, or any value falling within a range formed by any two thereof. In this application, the positive electrode may mean a positive electrode plate, and the negative electrode may mean a negative electrode plate.

The applicant hereof finds that, by adjusting the values of A, B, and C×B/1000 to fall within the above ranges, the high-temperature cycle performance and float charging performance of the lithium-ion battery can be improved. Without being limited to any theory, this may be because the structural stability of the positive electrode can be improved when the positive active material includes the metal element M. However, the structural stability of the negative electrode also needs to be improved to enhance the overall kinetic performance of the lithium-ion battery. In view of the above requirement, this application adjusts the content of the fluoroethylene carbonate in the electrolyte solution to improve the film-forming stability of the negative electrode, and adjusts the content of the trinitrile compound in the electrolyte solution to improve the high-temperature cycle performance of the lithium-ion battery, thereby endowing the lithium-ion battery with good high-temperature cycle performance and float charging performance.

In an embodiment of this application, A and B satisfy: 6 ≤ A × B ≤ 22. For example, A×B may be 6, 8, 10, 12, 15, 17, 20, 22, or a value falling within a range formed by any two thereof. By adjusting the value of A×B to fall within the above range, the fluoroethylene carbonate and the trinitrile compound in the electrolyte solution can work synergistically to endow the lithium-ion battery with good high-temperature cycle performance and float charging performance.

In an embodiment of this application, a defect rate of the negative electrode is Id/Ig, satisfying: 0.13 < Id/Ig ≤ 0.3, and Id/Ig and A satisfy: 6 ≤ A × (10 × Id/Ig) ≤ 24. For example, Id/Ig may be 0.13, 0.15, 0.2, 0.25, 0.3, or a value falling within a range formed by any two thereof; and the value of A×(10×Id/Ig) may be 6, 8, 9, 10, 12, 15, 17, 29, 20, 22, 24, or a value falling within a range formed by any two thereof. Without being limited to any theory, if the value of A×(10×Id/Ig) is overly small (for example, less than 6), then the kinetic performance of the negative electrode is deficient, side reactions increase, and the cycle stability of the lithium-ion battery deteriorates. When the value of A×(10×Id/Ig) is overly large (for example, greater than 24), then the high-temperature stability of the lithium-ion battery is impaired. By adjusting the value of A×(10×Id/Ig) to fall within the above range, this application obtains a lithium-ion battery of good high-temperature cycle performance and float charging performance.

In this application, in the defect rate Id/Ig of the negative electrode, Id is the peak intensity of the D peak in a Raman spectrum of the negative active material, Ig is the peak intensity of the G peak in the Raman spectrum of the negative active material, and the Id/Ig ratio represents defect density of the negative active material. The higher the Id/Ig ratio, the denser the defects.

In an implementation solution of this application, a content C of a metal element M in a positive active material satisfies: 5000 ppm ≤ C ≤ 9000 ppm. For example, C may be 5000 ppm, 5500 ppm, 6000 ppm, 6500 ppm, 7000 ppm, 7500 ppm, 8000 ppm, 8500 ppm, 9000 ppm, or a value falling within a range formed by any two thereof. Without being limited to any theory, by adjusting the value of C to fall within the above range, this application obtains a lithium-ion battery of good high-temperature cycle performance and a high energy density.

In an embodiment of this application, C and Id/Ig satisfy: 6 ≤ C/(3000 × Id/Ig) ≤ 20. For example, the value of C/(3000×Id/Ig) may be 6, 7, 10, 12, 15, 18, 20, or a value falling within a range formed by any two thereof. Without being limited to any theory, by adjusting the value of C/(3000×Id/Ig) to fall within the above range, this application obtains a lithium-ion battery of good high-temperature cycle performance and float charging performance.

In an embodiment of this application, the electrolyte solution further includes ethylene carbonate and propylene carbonate. Based on the mass of the electrolyte solution, a mass percent of the ethylene carbonate is D%, a mass percent of the propylene carbonate is E%, and D and E satisfy: 20 ≤ D + E ≤ 50, and 1 ≤ E/D ≤ 3. For example, D+E may be 20, 25, 30, 35, 40, 45, 50, or a value falling within a range formed by any two thereof; and E/D may be 1, 1.5, 2, 2.5, 3, or a value falling within a range formed by any two thereof. Without being limited to any theory, by adjusting D+E and E/D to fall within the above ranges, this application further improves the high-temperature cycle performance and the float charging performance of the lithium-ion battery.

In an embodiment of this application, the electrolyte solution further includes a dinitrile compound. Based on the mass of the electrolyte solution, a mass percent of the dinitrile compound is F%, satisfying: 1 ≤ F ≤ 3. For example, F may be 1, 1.5, 2, 2.5, 3, or a value falling within a range formed by any two thereof. Without being limited to any theory, when the content of the dinitrile compound is overly low (for example, lower than 1%), the effect of protection for the positive electrode is not significant; and, when the content of the dinitrile compound is overly high (for example, higher than 3%), the viscosity of the electrolyte solution is affected, and the internal resistance of the lithium-ion battery is increased. By adjusting the content of the dinitrile compound to fall within the above range, this application further improves the high-temperature cycle performance and the float charging performance of the lithium-ion battery.

In an embodiment of this application, F and B satisfy: 2 ≤ F + B ≤ 6. For example, the value of F+B may be 2, 2.5, 3, 3.5, 4, 4.5, 5, 5.5, 6, or a value falling within a range formed by any two thereof. Without being limited to any theory, by adjusting F+B to fall within the above range, this application further improves the high-temperature cycle performance and the float charging performance of the lithium-ion battery.

In an implementation solution of this application, the electrolyte solution further includes at least one of 1,3-propane sultone, ethylene sulfate, vinylene carbonate, dimethyl carbonate, diethyl carbonate, ethyl methyl carbonate, or γ-butyrolactone. The electrochemical device satisfies at least one of the following conditions: a) based on the mass of the electrolyte solution, a mass percent of the 1,3-propane sultone is 0.5% to 5%; b) based on the mass of the electrolyte solution, a mass percent of the ethylene sulfate is 0.1% to 1%; c) based on the mass of the electrolyte solution, a mass percent of the vinylene carbonate is 0.1% to 1%; d) based on the mass of the electrolyte solution, a mass percent of the dimethyl carbonate is 0.1% to 30%; e) based on the mass of the electrolyte solution, a mass percent of the diethyl carbonate is 0.1% to 30%; f) based on the mass of the electrolyte solution, a mass percent of the ethyl methyl carbonate is 0.1% to 30%; or g) based on the mass of the electrolyte solution, a mass percent of the γ-butyrolactone is 0.01% to 5%. Without being limited to any theory, by adjusting the foregoing additives in the electrolyte solution to fall within the ranges specified herein, this application further improves the high-temperature cycle performance and the float charging performance of the lithium-ion battery.

The trinitrile compound is not particularly limited in this application, as long as the objectives of this application can be achieved. For example, the trinitrile compound includes at least one of 1,3,5-pentanetricarbonitrile, 1,2,3-propanetricarbonitrile, 1,3,6-hexanetricarbonitrile, 1,2,6-hexanetricarbonitrile, 1,2,3-tris(2-cyanoethoxy)propane, 1,2,4-tris(2-cyanoethoxy)butane, or 1,2,5-tris(cyanoethoxy)pentane.

The electrolyte solution according to this application includes a lithium salt. The lithium salt is not particularly limited in this application, as long as the objectives of this application can be achieved. For example, the lithium salt includes at least one of lithium hexafluorophosphate, lithium bis(trifluoromethanesulfonyl)imide, lithium bis(fluorosulfonyl)imide, lithium tetrafluoroborate, lithium bis(oxalato)borate, lithium difluoro(oxalato)borate, or lithium difluorophosphate.

The dinitrile compound is not particularly limited in this application, as long as the objectives of this application can be achieved. For example, the dinitrile compound includes at least one of succinonitrile, glutaronitrile, adiponitrile, 1,5-dicyanopentane, 1,6-dicyano hexane, 1,7-dicyano heptane, 1,8-dicyano octane, 1,9-dicyano nonane, 1,10-dicyano decane, 1,12-dicyano dodecane, tetramethylsuccinonitrile, 2-methylglutaronitrile, 2,4-dimethylglutaronitrile, or 2,2,4,4-tetramethylglutaronitrile.

A second aspect of this application provides an electronic device. The electronic device includes the electrochemical device described in the foregoing embodiment of this application.

This application provides an electrochemical device and an electronic device. The electrolyte solution in the electrochemical device includes fluoroethylene carbonate and a trinitrile compound. The mass percent of the fluoroethylene carbonate is A%, satisfying: 4 ≤ A ≤ 10; the mass percent of the trinitrile compound is B%, satisfying: 1 ≤ B ≤ 3. By adjusting the mass percent C% of the metal element M in the positive active material and the mass percent B% of the trinitrile compound to satisfy 7 ≤ C × B/1000 ≤ 27, this application improves the float charging performance and cycle performance of the electrochemical device.

### DETAILED DESCRIPTION OF EMBODIMENTS

To make the objectives, technical solutions, and advantages of this application clearer, the following describes this application in more detail with reference to embodiments. Evidently, the described embodiments are merely a part of but not all of the embodiments of this application. All other embodiments derived by a person of ordinary skill in the art based on the embodiments of this application without making any creative efforts still fall within the protection scope of this application.

It is hereby noted that in specific embodiments of this application, this application is construed by using a lithium-ion battery as an example of the electrochemical device, but the electrochemical device according to this application is not limited to the lithium-ion battery.

The method for preparing a positive active material containing a metal element M (hereinafter referred to as a modified positive active material) is not particularly limited in this application. The preparation method commonly used by a person skilled in the art may be employed. For example, the preparation method is to dope a positive active material LiCoO₂ with an aluminum-containing compound (such as Al₂O₃, Al(OH)₃, and AlF₃), a magnesium-containing compound (such as MgO), or a Ti-containing compound (such as TiO₂) to obtain the modified positive active material. In addition, in this application, by adjusting the content of the metal element M in the modified positive active material, for example, by adjusting the dosage of the compound containing the metal element M, the metal element M in the positive active material layer can be changed. The adjustment process is not particularly limited in this application, as long as the objectives of this application can be achieved.

The positive current collector is not particularly limited in this application, and may be any positive current collector well known in the art. For example, the positive current collector may be an aluminum foil, an aluminum alloy foil, or a composite current collector.

The negative current collector is not particularly limited in this application, and may be made of a material such as a metal foil or a porous metal sheet. For example, the negative current collector is a foil or porous plate made of a metal such as copper, nickel, titanium, or iron, or an alloy thereof, such as a copper foil. The negative active material layer includes a negative active material, a conductive agent, a binder, and a thickener. The binder may be at least one of styrene butadiene rubber (SBR), polyvinylidene difluoride (PVDF), polytetrafluoroethylene (PTFE), polyvinyl butyral (PVB), water-based acrylic resin (water-based acrylic resin), or carboxymethyl cellulose (CMC). The thickener may be carboxymethyl cellulose (CMC).

The substrate of the separator according to this application includes, but is not limited to, at least one of polyethylene (PE), polypropylene (PP), polyethylene terephthalate (PET), polyimide (PI), or aramid fiber. For example, the polyethylene includes at least one constituent selected from high-density polyethylene, low-density polyethylene, or ultra-high-molecular-weight polyethylene. Especially, the polyethylene and the polypropylene are highly effective in preventing short circuits, and can improve stability of the electrochemical device through a turn-off effect. The substrate may be a single-layer structure or a multi-layer hybrid composite structure with a thickness of 3 µm to 20 µm.

The electronic device is not particularly limited herein, and may be any electronic device known in the prior art. In some embodiments, the electronic device may include, but not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

The preparation process of the electrochemical device is well known to a person skilled in the art, and is not particularly limited in this application. For example, a process of manufacturing a lithium-ion battery may include: stacking a positive electrode and a negative electrode that are separated by a separator, performing operations such as winding and folding as required, placing them into a housing, injecting an electrolyte solution into the housing, and sealing the housing. In addition, an overcurrent prevention element, a guide plate, and the like may be further placed into the housing as required, so as to prevent the rise of internal pressure, overcharge, and overdischarge of the lithium-ion battery.

The implementations of this application are described below in more detail with reference to embodiments and comparative embodiments. Various tests and evaluations are performed by the following methods. In addition, unless otherwise specified, the word "parts" means parts by mass, and the symbol "%" means a percentage by mass.

### Test methods and devices

### Testing the content of the metal element M in the positive active material

Scraping, by using a scraper, the active material off a positive electrode plate cleaned with dimethyl carbonate (DMC), and dissolving the active material with a mixed solvent (for example, 0.4 gram of positive active material is dissolved by a mixed solvent, where the mixed solvent is 10 mL of aqua regia (the aqua regia is a combination of a nitric acid and a hydrochloric acid mixed at a ratio of 1: 1) mixed with 2 mL of HF. Bringing the solution to a predetermined volume of 100 mL, and then measuring the content (in ppm) of each metal element M such as Ti, Mg, and Al in the solution by using an ICP analyzer.

### Testing the defect rate of the negative electrode

Keeping the surface of the dried negative electrode plate flat, and putting the negative electrode plate into a specimen holder of a Raman test instrument (JobinYvonLabRAM HR) for testing to obtain a Raman spectrum. Determining the peak intensity of the D peak and the peak intensity of the G peak in the Raman spectrogram, and calculating the Id/Ig ratio to represent the defect rate of the negative electrode.

### Method for testing the cycle performance of a lithium-ion battery

Charging a lithium-ion battery at a constant current of 0.7 C rate in a 45 °C environment until the voltage reaches 4.5 V, then charging the battery at a constant voltage until the current reaches 0.05 C, and then discharging the battery at a constant current of 1 C until the voltage reaches 3.0 V, thereby completing one charge-and-discharge cycle, referred to as a first cycle. Recording the first-cycle discharge capacity of the lithium-ion battery. Repeating the charge-and-discharge cycle for the lithium-ion battery according to the foregoing steps, and recording the discharge capacity at the end of each cycle until the discharge capacity of the lithium-ion battery fades to 80% of the first-cycle discharge capacity. Recording the number of charge-and-discharge cycles.

### Testing the float charging performance of a lithium-ion battery

Charging a lithium-ion battery at a constant current of 0.7C at 45 °C until the voltage reaches 4.5 V, and then charging the battery at a constant voltage for 90 days, during which the thickness of the lithium-ion battery is measured and recorded every other 3 days and the measurement is performed by using a micrometer. Calculating the float charging thickness expansion rate of the lithium-ion battery according to the following expression, and using the time taken for the thickness expansion rate to reach 10% as an indicator of the float charging performance of the lithium-ion battery, where a longer time taken for the thickness expansion rate to reach 10% indicates higher float charging performance of the lithium-ion battery: thickness expansion rate of a lithium-ion battery = (thickness of the lithium-ion battery during float charging - initial thickness of the lithium-ion battery)/initial thickness of the lithium-ion battery × 100%.

### Embodiment 1

### <Preparing a modified positive active material>

Mixing commercial lithium cobalt oxide (LiCoO₂) and an oxide containing a metal element M (a mixture of magnesium oxide (MgO), titanium dioxide (TiO₂), and aluminum oxide (Al₂O₃)) in a high-speed mixer at a speed of 300 r/min for 20 minutes. Putting the mixture in an air kiln, and increasing the temperature at a speed of 5 °C/min until 820 °C, and keeping the temperature for 24 hours. Naturally cooling the mixture, and then taking it out. Passing the mixture through a 300-mesh sieve to obtain a modified positive active material (that is, modified LiCoO₂). In the modified positive active material, the total content of the metal element M (Mg, Ti, Al) in the positive active material is 7000 ppm, and the molar ratio between Mg, Ti, and Al is 1: 1: 1.

### <Preparing a positive electrode plate>

Mixing the prepared modified LiCoO₂, a conductive agent carbon nanotubes (CNT), and a binder polyvinylidene difluoride (PVDF) at a mass ratio of 95: 2: 3, adding N-methyl-pyrrolidone (NMP) as a solvent, and stirring the mixture well with a vacuum mixer until the system is homogeneous, so as to obtain a positive electrode slurry, in which a solid content is 75 wt%. Coating one surface of a 12-µm thick positive current collector aluminum foil with the positive electrode slurry evenly, and drying the aluminum foil at 85 °C. Performing cold-pressing to obtain a positive electrode plate coated with a 100 µm-thick positive active material layer. Subsequently, repeating the foregoing steps on the other surface of the positive electrode plate to obtain a positive electrode plate coated with the positive active material layer on both sides. Cutting the positive electrode plate into a size of 74 mm × 867 mm, welding tabs, and leaving the positive electrode plate ready for future use.

### <Preparing a negative electrode plate>

Mixing artificial graphite as a negative active material, styrene butadiene rubber (SBR), and carboxymethyl cellulose (CMC) at a mass ratio of 95: 2: 3, adding deionized water as a solvent, blending the mixture into a slurry with a solid content of 70 wt%, and stirring the slurry well. Coating one surface of an 8 µm-thick copper foil with the slurry evenly, and drying the foil at 110 °C. Performing cold-pressing to obtain a negative electrode plate coated with a 150 µm-thick negative active material layer on a single side. Subsequently, repeating the foregoing coating step on the other surface of the negative electrode plate to obtain a negative electrode plate coated with the negative active material layer on both sides. Cutting the negative electrode plate into a size of 74 mm × 867 mm, welding tabs, and leaving the negative electrode plate ready for future use. The defect rate Id/Ig of the negative electrode plate is 0.17.

### <Preparing an electrolyte solution>

Mixing ethylene carbonate (EC), propylene carbonate (PC), and diethyl carbonate (DEC) well at a mass ratio of 1: 1: 1 in an argon atmosphere glovebox in which the moisture content is less than 10 ppm, so as to obtain a base solvent. Adding LiPF₆, a trinitrile compound 1,3,6-hexanetricarbonitrile and fluoroethylene carbonate. Stirring well to form an electrolyte solution, in which the concentration of LiPF₆ is 12.5 wt%. Table 1 shows the mass percent of the trinitrile compound 1,3,6-hexanetricarbonitrile and the fluoroethylene carbonate.

### <Preparing a separator>

Using a 15-µm thick polyethylene (PE) porous polymer film as a separator.

### <Preparing a lithium-ion battery>

Stacking the positive electrode plate, separator, and negative electrode plate sequentially in such a way that the separator is located between the positive electrode plate and the negative electrode plate to serve a function of separation, and winding the stacked structure to obtain an electrode assembly. Putting the electrode assembly into an aluminum plastic film package, dehydrating the packaged electrode assembly at 80 °C, and then injecting the prepared electrolyte solution. Performing vacuum sealing, standing, chemical formation, and shaping to obtain a lithium-ion battery.

### Embodiments 2 to 12

Identical to Embodiment 1 except that: the content of the fluoroethylene carbonate, the type and content of the trinitrile compound, and the total content of the metal element M in the electrolyte solution are adjusted, and the relevant preparation parameters and performance changes are shown in Table 1.

### Embodiment 13

Identical to Embodiment 10 except that: in <Preparing a modified positive active material>, the oxide containing a metal element M is a mixture of MgO and Al₁O₃, the molar ratio between Mg and Al is 1: 1, and the relevant preparation parameters and performance changes are shown in Table 2.

### Embodiment 14

Identical to Embodiment 10 except that: in <Preparing a modified positive active material>, the oxide containing a metal element M is Al₁O₃, and the relevant preparation parameters and performance changes are shown in Table 2.

### Embodiments 15 to 17

Identical to Embodiment 1 except that the content of the fluoroethylene carbonate in the electrolyte solution and the defect rate Id/Ig of the negative electrode plate are adjusted according to the values shown in Table 2.

### Embodiment 18

Identical to Embodiment 1 except that the process of <Preparing an electrolyte solution> is different from that in Embodiment 1.

Mixing ethylene carbonate (EC), propylene carbonate (PC), and diethyl carbonate (DEC) well at a mass ratio of 10: 15: 54.5 in an argon atmosphere glovebox in which the moisture content is less than 10 ppm, so as to obtain a base solvent. Adding LiPF₆, a trinitrile compound 1,3,6-hexanetricarbonitrile and fluoroethylene carbonate. Stirring well to form an electrolyte solution, in which the concentration of LiPF₆ is 12.5 wt%. Table 3 shows the mass percent of the trinitrile compound 1,3,6-hexanetricarbonitrile and the fluoroethylene carbonate, and the relevant preparation parameters and performance changes.

### Embodiment 19

Identical to Embodiment 1 except that the process of <Preparing an electrolyte solution> is different from that in Embodiment 1.

Mixing ethylene carbonate (EC), propylene carbonate (PC), and diethyl carbonate (DEC) well at a mass ratio of 10: 15: 39.5 in an argon atmosphere glovebox in which the moisture content is less than 10 ppm, so as to obtain a base solvent. Adding LiPF₆, a trinitrile compound 1,3,6-hexanetricarbonitrile and fluoroethylene carbonate. Stirring well to form an electrolyte solution, in which the concentration of LiPF₆ is 12.5 wt%. Table 3 shows the mass percent of the trinitrile compound 1,3,6-hexanetricarbonitrile and the fluoroethylene carbonate, and the relevant preparation parameters and performance changes.

### Embodiment 20

Identical to Embodiment 1 except that the process of <Preparing an electrolyte solution> is different from that in Embodiment 1.

Mixing ethylene carbonate (EC), propylene carbonate (PC), and diethyl carbonate (DEC) well at a mass ratio of 10: 15: 34.5 in an argon atmosphere glovebox in which the moisture content is less than 10 ppm, so as to obtain a base solvent. Adding LiPF₆, a trinitrile compound 1,3,6-hexanetricarbonitrile and fluoroethylene carbonate. Stirring well to form an electrolyte solution, in which the concentration of LiPF₆ is 12.5 wt%. Table 3 shows the mass percent of the trinitrile compound 1,3,6-hexanetricarbonitrile and the fluoroethylene carbonate, and the relevant preparation parameters and performance changes.

### Embodiment 21

Identical to Embodiment 2 except that the process of <Preparing an electrolyte solution> is different from that in Embodiment 2.

### <Preparing an electrolyte solution>

Mixing ethylene carbonate (EC), propylene carbonate (PC), and diethyl carbonate (DEC) well at a mass ratio of 1: 1: 1 in an argon atmosphere glovebox in which the moisture content is less than 10 ppm, so as to obtain a base solvent. Adding LiPF₆, a trinitrile compound 1,3,6-hexanetricarbonitrile, fluoroethylene carbonate, and a dinitrile compound succinonitrile. Stirring well to form an electrolyte solution, in which the concentration of LiPF₆ is 12.5 wt%. Table 4 shows the mass percent of the trinitrile compound 1,3,6-hexanetricarbonitrile, the fluoroethylene carbonate, and the dinitrile compound succinonitrile, and the relevant preparation parameters and performance changes.

### Embodiments 22 to 27

Identical to Embodiment 21 except that, in <Preparing an electrolyte solution>, the type and content of the dinitrile compound are adjusted as shown in Table 4.

### Embodiment 28

Identical to Embodiment 2 except that the process of <Preparing an electrolyte solution> is different from that in Embodiment 2.

### <Preparing an electrolyte solution>

Mixing ethylene carbonate (EC), propylene carbonate (PC), and diethyl carbonate (DEC) well at a mass ratio of 1: 1: 1 in an argon atmosphere glovebox in which the moisture content is less than 10 ppm, so as to obtain a base solvent. Adding LiPF₆, a trinitrile compound 1,3,6-hexanetricarbonitrile, fluoroethylene carbonate, and an additive 1,3-propane sultone. Stirring well to form an electrolyte solution, in which the concentration of LiPF₆ is 12.5 wt%. Table 5 shows the mass percent of the trinitrile compound 1,3,6-hexanetricarbonitrile, the fluoroethylene carbonate, and the additive 1,3-propane sultone, and the relevant preparation parameters and performance changes.

### Embodiments 29 to 30

Identical to Embodiment 28 except that, in <Preparing an electrolyte solution>, the type and content of the additive are adjusted as shown in Table 5.

### Comparative Embodiments 1 to 6

Identical to Embodiment 1 except that: the type of the trinitrile compound in the electrolyte solution, the content of the fluoroethylene carbonate, the content of the trinitrile compound, and the total content of the metal element M are adjusted, and the relevant preparation parameters and performance changes are shown in Table 1.

### Comparative Embodiment 7

Identical to Embodiment 1 except that the content of the fluoroethylene carbonate in the electrolyte solution and the defect rate Id/Ig of the negative electrode plate are adjusted according to the values shown in Table 2.

**Table 1**

| | Type of trinitrile compound | Content of fluoroethylene carbonate (A%) | Content of trinitrile compound (B%) | Total content of metal element M (C%) | A×B | C×B/1000 | Capacity retention rate | Float charging performance (h) |
|---|---|---|---|---|---|---|---|---|
| Embodiment 1 | 1,3,6-hexanetricarbonitrile | 6 | 1 | 7000 | 6 | 7 | 81% | 1300 |
| Embodiment 2 | 1,3,6-hexanetricarbonitrile | 6 | 2 | 7000 | 12 | 14 | 83% | 1500 |
| Embodiment 3 | 1,3,6-hexanetricarbonitrile | 6 | 3 | 7000 | 18 | 21 | 83% | 1800 |
| Embodiment 4 | 1,3,6-hexanetricarbonitrile | 4 | 2 | 7000 | 8 | 14 | 80% | 1550 |
| Embodiment 5 | 1,3,6-hexanetricarbonitrile | 5 | 2 | 7000 | 10 | 14 | 82% | 1570 |
| Embodiment 6 | 1,3,6-hexanetricarbonitrile | 8 | 2 | 7000 | 16 | 14 | 84% | 1450 |
| Embodiment 7 | 1,3,6-hexanetricarbonitrile | 10 | 2 | 7000 | 20 | 14 | 83% | 1350 |
| Embodiment 8 | 1,3,6-hexanetricarbonitrile | 6 | 2 | 5000 | 12 | 10 | 78% | 1000 |
| Embodiment 9 | 1,3,6-hexanetricarbonitrile | 6 | 2 | 9000 | 12 | 18 | 85% | 2000 |
| Embodiment 10 | 1,3,6-hexanetricarbonitrile | 6 | 3 | 9000 | 18 | 27 | 85% | 2300 |
| Embodiment 11 | 1,2,3-tris(2-cyanoethoxy)propane | 6 | 2 | 7000 | 12 | 14 | 83% | 1470 |
| Embodiment 12 | 1,3,6-hexanetricarbonitrile + 1,2,3-tris(2-cyanoethoxy)propane (at a mass ratio of 1:1) | 6 | 2 | 7000 | 12 | 14 | 83% | 1480 |
| Embodiment 13 | 1,3,6-hexanetricarbonitrile | 6 | 3 | 9000 | 18 | 27 | 84% | 2160 |
| Embodiment 14 | 1,3,6-hexanetricarbonitrile | 6 | 3 | 9000 | 18 | 27 | 82.5% | 2100 |
| Comparative Embodiment 1 | 1,3,6-hexanetricarbonitrile | 2 | 2 | 7000 | 4 | 14 | 50% | 1800 |
| Comparative Embodiment 2 | 1,3,6-hexanetricarbonitrile | 12 | 2 | 7000 | 24 | 14 | 76% | 1200 |
| Comparative Embodiment 3 | 1,3,6-hexanetricarbonitrile | 6 | 4 | 7000 | 24 | 28 | 78% | 2000 |
| Comparative Embodiment 4 | 1,3,6-hexanetricarbonitrile | 6 | 0.5 | 7000 | 3 | 3.5 | 70% | 1100 |
| Comparative Embodiment 5 | 1,3,6-hexanetricarbonitrile | 6 | 2 | 10000 | 12 | 20 | 77% | 2100 |
| Comparative Embodiment 6 | 1,3,6-hexanetricarbonitrile | 6 | 2 | 3000 | 12 | 6 | 65% | 700 |

**Table 2**

| | Content of fluoroethylene carbonate (A%) | Id/Ig | A×(10×Id/Ig) | C/(3000×Id/Ig) | Capacity retention rate | Float charging performance (h) |
|---|---|---|---|---|---|---|
| Embodiment 15 | 4 | 0.15 | 6 | 15.6 | 81% | 1550 |
| Embodiment 16 | 6 | 0.3 | 18 | 7.8 | 82% | 1500 |
| Embodiment 17 | 8 | 0.3 | 24 | 7.8 | 83% | 1400 |
| Comparative Embodiment 7 | 2 | 0.2 | 4 | 11.7 | 50% | 1800 |

**Table 3**

| | Content of fluoroethylene carbonate (A%) | Content of trinitrile compound (B%) | Content of ethylene carbonate (D%) | Content of propylene carbonate (E%) | D+E | E/D | Capacity retention rate | Float charging performance (h) |
|---|---|---|---|---|---|---|---|---|
| Embodiment 8 | 6 | 2 | 26.5 | 26.5 | 53 | 1 | 78% | 1000 |
| Embodiment 18 | 6 | 2 | 10 | 15 | 25 | 1.5 | 82% | 1700 |
| Embodiment 19 | 6 | 2 | 15 | 25 | 40 | 1.7 | 83% | 1500 |
| Embodiment 20 | 6 | 2 | 20 | 25 | 45 | 1.25 | 84% | 1400 |

**Table 4**

| | Type of dinitrile compound | Content of dinitrile compound (F%) | Content of trinitrile compound (B%) | F+B | Capacity retention rate | Float charging performance (h) |
|---|---|---|---|---|---|---|
| Embodiment 2 | / | / | 2 | / | 83% | 1500 |
| Embodiment 21 | Adiponitrile | 1 | 2 | 3 | 83.5% | 1550 |
| Embodiment 22 | Adiponitrile | 2 | 2 | 4 | 84% | 1600 |
| Embodiment 23 | Adiponitrile | 3 | 2 | 5 | 84% | 1700 |
| Embodiment 24 | Adiponitrile | 3 | 3 | 6 | 84% | 2000 |
| Embodiment 25 | Succinonitrile | 2 | 2 | 4 | 84.5% | 1700 |
| Embodiment 26 | 2-methyl glutaronitrile | 3 | 2 | 5 | 84% | 1600 |
| Embodiment 27 | Succinonitrile + adiponitrile (at a mass ratio of 1: 1) | 3 | 2 | 5 | 84.3% | 1650 |

| | | | | | | |
|---|---|---|---|---|---|---|
| In Table 4, "/" means "not contained" or "not measured". | | | | | | |

**Table 5**

| | Type of additive | Type and content of additive (%) | Capacity retention rate | Float charging performance (h) |
|---|---|---|---|---|
| Embodiment 2 | / | / | 83% | 1500 |
| Embodiment 28 | 1,3-propane sultone | 3 | 84% | 1600 |
| Embodiment 29 | Ethylene sulfate | 0.5 | 83.4% | 1540 |
| Embodiment 30 | 1,3-propane sultone + ethylene sulfate (at a mass ratio of 3: 1) | 4 | 84.6% | 1650 |

| | | | | |
|---|---|---|---|---|
| In Table 5, "/" means "not contained" or "not measured". | | | | |

As can be seen from Embodiments 1 to 7 versus Comparative Embodiments 1 to 4 in Table 1, by adjusting the values of A, B, and C×B/1000 to fall within the ranges specified herein, the 45 °C capacity retention rate and the float charging performance of the lithium-ion battery are enhanced significantly, indicating that the lithium-ion battery of this application achieves good high-temperature cycle performance and float charging performance.

Further, as can be seen from Embodiments 1 to 14 in Table 1, on the basis that the values of A, B, and C×B/1000 fall within the ranges specified herein, by adjusting the value of A×B, the fluoroethylene carbonate and the trinitrile compound in the electrolyte solution are caused to work synergistically to obtain lithium-ion batteries of good high-temperature cycle performance and float charging performance.

As can be seen from Embodiments 8 and 9 versus Comparative Embodiment 6 in Table 1, when the content of the metal element M is overly low (as in Comparative Embodiment 6), the 45 °C capacity retention rate and the float charging performance of the lithium-ion battery decline significantly. Further, as can be seen from Embodiment 9 versus Comparative Embodiment 5 in Table 1, when the content of the metal element M is overly high (as in Comparative Embodiment 5), the float charging performance of the lithium-ion battery is not improved significantly, but the 45 °C capacity retention rate declines significantly. Evidently, on the basis that the values of A, B, and C×B/1000 fall within the ranges specified herein, by adjusting the content of the metal element M to fall within the range specified herein, this application can obtain lithium-ion batteries of good high-temperature cycle performance and float charging performance.

As can be seen from Embodiments 9 and 10 in Table 1, on the basis that the values of A, B, and C×B/1000 fall within the ranges specified herein, by increasing the content of the trinitrile compound, this application can further improve the float charging performance of the lithium-ion battery.

As can be seen from Embodiments 2, 11, and 12 in Table 1, on the basis that the values of A, B, and C×B/1000 fall within the ranges specified herein, the lithium-ion batteries of good high-temperature cycle performance and float charging performance can be obtained as long as the type of the trinitrile compound falls within the range specified herein.

As can be seen from Embodiments 10, 13, and 14 in Table 1, on the basis that the values of A, B, and C×B/1000 fall within the ranges specified herein, the lithium-ion batteries of good high-temperature cycle performance and float charging performance can be obtained as long as the type of the metal element M falls within the range specified herein.

As can be seen from Embodiments 15 to 17 versus Comparative Embodiment 7 in Table 2, on the basis that the values of A, B, and C×B/1000 fall within the ranges specified herein, by adjusting the value of A×(10×Id/Ig) to fall within the range specified herein, this application can obtain lithium-ion batteries of good high-temperature cycle performance and float charging performance.

As can be seen from Embodiments 1 to 17 in Table 3, on the basis that the values of A, B, and C×B/1000 fall within the ranges specified herein, by adjusting the value of C/(3000×Id/Ig) to fall within the range specified herein, this application can obtain the lithium-ion batteries of good high-temperature cycle performance and float charging performance.

As can be seen from Embodiment 8 and Embodiments 18 to 20 in Table 3, on the basis that the values of A, B, and C×B/1000 fall within the ranges specified herein, by adjusting the content of the ethylene carbonate and propylene carbonate in the electrolyte solution, this application can further improve the high-temperature cycle performance and float charging performance of the lithium-ion battery.

As can be seen from Embodiment 2 and Embodiments 21 to 26 in Table 4, on the basis that the values of A, B, and C×B/1000 fall within the ranges specified herein, the high-temperature cycle performance and float charging performance of the lithium-ion battery can be further improved when the electrolyte solution further includes a dinitrile compound and when a sum of content of the dinitrile compound and the trinitrile compound falls within the range specified herein.

As can be seen from Embodiment 2 and Embodiments 28 to 30 in Table 5, on the basis that the values of A, B, and C×B/1000 fall within the ranges specified herein, the high-temperature cycle performance and float charging performance of the lithium-ion battery can be further improved when the electrolyte solution further includes at least one of the following additives: 1,3-propane sultone, ethylene sulfate, vinylene carbonate, dimethyl carbonate, diethyl carbonate, ethyl methyl carbonate, or γ-butyrolactone.

What is described above is merely exemplary embodiments of this application, but is not intended to limit this application. Any modifications, equivalent replacements, improvements, and the like made without departing from the spirit and principles of this application still fall within the protection scope of this application.

## Claims

1. An electrochemical device, comprising a positive electrode, a negative electrode, a separator, and an electrolyte solution; wherein
the electrolyte solution comprises fluoroethylene carbonate and a trinitrile compound; based on a mass of the electrolyte solution, a mass percent of the fluoroethylene carbonate is A%, satisfying: 4 ≤ A ≤ 10, and a mass percent of the trinitrile compound is B%, satisfying: 1 ≤ B ≤ 3; and
the positive electrode comprises a positive active material, the positive active material comprises a metal element M, the metal element M comprises at least one of Ti, Mg, or Al, a content of the metal element M in the positive active material is C ppm, and 7 ≤ C × B/1000 ≤ 27.

2. The electrochemical device according to claim 1, wherein A and B satisfy: 6 ≤ A × B ≤ 22.

3. The electrochemical device according to claim 1, wherein a defect rate of the negative electrode is Id/Ig, satisfying: 0.13 < Id/Ig ≤ 0.3 and 6 ≤ A × (10 × Id/Ig) ≤ 24.

4. The electrochemical device according to claim 3, wherein a content C of the metal element M in the positive active material satisfies: 5000 ppm ≤ C ≤ 9000 ppm.

5. The electrochemical device according to claim 4, wherein C and Id/Ig satisfy: 6 ≤ C/(3000 × Id/Ig) ≤ 20.

6. The electrochemical device according to claim 1, wherein the electrolyte solution further comprises ethylene carbonate and propylene carbonate, and, based on the mass of the electrolyte solution, a mass percent of the ethylene carbonate is D%, a mass percent of the propylene carbonate is E%, and D and E satisfy: 20 ≤ D + E ≤ 50, and 1 ≤ E/D ≤ 3.

7. The electrochemical device according to claim 1, wherein the electrolyte solution further comprises a dinitrile compound, and, based on the mass of the electrolyte solution, a mass percent of the dinitrile compound is F%, satisfying: 1 ≤ F ≤ 3.

8. The electrochemical device according to claim 7, wherein F and B satisfy: 2 ≤ F + B ≤ 6.

9. The electrochemical device according to claim 1, wherein the electrolyte solution further comprises at least one of 1,3-propane sultone, ethylene sulfate, vinylene carbonate, dimethyl carbonate, diethyl carbonate, ethyl methyl carbonate, or γ-butyrolactone.

10. The electrochemical device according to claim 9, wherein the electrochemical device satisfies at least one of the following conditions:
a) based on the mass of the electrolyte solution, a mass percent of the 1,3-propane sultone is 0.5% to 5%;
b) based on the mass of the electrolyte solution, a mass percent of the ethylene sulfate is 0.1% to 1%;
c) based on the mass of the electrolyte solution, a mass percent of the vinylene carbonate is 0.1% to 1%;
d) based on the mass of the electrolyte solution, a mass percent of the dimethyl carbonate is 0.1% to 30%;
e) based on the mass of the electrolyte solution, a mass percent of the diethyl carbonate is 0.1% to 30%;
f) based on the mass of the electrolyte solution, a mass percent of the ethyl methyl carbonate is 0.1% to 30%; or
g) based on the mass of the electrolyte solution, a mass percent of the γ-butyrolactone is 0.01% to 5%.

11. The electrochemical device according to claim 1, wherein the trinitrile compound comprises at least one of 1,3,5-pentanetricarbonitrile, 1,2,3-propanetricarbonitrile, 1,3,6-hexanetricarbonitrile, 1,2,6-hexanetricarbonitrile, 1,2,3-tris(2-cyanoethoxy)propane, 1,2,4-tris(2-cyanoethoxy)butane, or 1,2,5-tri s(cyanoethoxy)pentane.

12. The electrochemical device according to claim 1, wherein the electrolyte solution comprises a lithium salt, and the lithium salt comprises at least one of lithium hexafluorophosphate, lithium bis(trifluoromethanesulfonyl)imide, lithium bis(fluorosulfonyl)imide, lithium tetrafluoroborate, lithium bis(oxalato)borate, lithium difluoro(oxalato)borate, or lithium difluorophosphate.

13. The electrochemical device according to claim 7, wherein the dinitrile compound comprises at least one of succinonitrile, glutaronitrile, adiponitrile, 1,5-dicyanopentane, 1,6-dicyano hexane, 1,7-dicyano heptane, 1,8-dicyano octane, 1,9-dicyano nonane, 1,10-dicyano decane, 1,12-dicyano dodecane, tetramethylsuccinonitrile, 2-methylglutaronitrile, 2,4-dimethylglutaronitrile, or 2,2,4,4-tetramethylglutaronitrile.

14. An electronic device, comprising the electrochemical device according to any one of claims 1 to 13.
